(19) **Europäisches Patentamt / European Patent Office / Office européen des brevets**

(11) **EP 1 505 881 B1**

(12) **EUROPEAN PATENT SPECIFICATION**

(45) Date of publication and mention
of the grant of the patent:
**21.10.2009 Bulletin 2009/43**

(51) Int Cl.:
*A23G 9/20* (2006.01)    *A23G 9/28* (2006.01)
*B65D 85/78* (2006.01)

(21) Application number: **03735454.5**

(22) Date of filing: **15.05.2003**

(86) International application number:
**PCT/EP2003/005442**

(87) International publication number:
**WO 2003/096821 (27.11.2003 Gazette 2003/48)**

(54) **FROZEN AERATED PRODUCT IN AN AEROSOL CONTAINER**

LUFTHALTIGE GEFRORENE PRODUKTE IN EINEM AEROSOLBEHÄLTER

PRODUIT AERE CONGELE CONTENU DANS UN RECIPIENT

(84) Designated Contracting States:
**AT BE BG CH CY CZ DE DK EE ES FI FR GB GR HU IE IT LI LU MC NL PT RO SE SI SK TR**

(30) Priority: **21.05.2002 EP 02253567**
**12.11.2002 EP 02257829**

(43) Date of publication of application:
**16.02.2005 Bulletin 2005/07**

(73) Proprietors:
• **Unilever PLC**
**London**
**EC4Y 0DY (GB)**
Designated Contracting States:
**CY GB IE**
• **Unilever N.V.**
**3013 AL Rotterdam (NL)**
Designated Contracting States:
**AT BE BG CH CZ DE DK EE ES FI FR GR HU IT LI LU MC NL PT RO SE SI SK TR**

(72) Inventors:
• **CAMPBELL, Iain James**
**Bedford,**
**Bedfordshire MK44 1LQ (GB)**
• **GRAY, Sarah Jane**
**Bedford,**
**Bedfordshire MK44 1LQ (GB)**
• **KEENAN, Robert Daniel**
**Bedford,**
**Bedfordshire MK44 1LQ (GB)**

(74) Representative: **Clarke, Christopher John et al**
**Unilever Patent Group**
**Colworth Science Park**
**Sharnbrook**
**Bedford MK44 1LQ (GB)**

(56) References cited:
**EP-A- 1 061 006**    **GB-A- 1 196 286**
**US-A- 3 615 718**    **US-A- 3 677 443**
**US-A- 3 896 970**    **US-A- 4 110 476**
**US-A- 4 374 155**    **US-A- 4 685 597**
**US-A- 4 851 239**

**Description**

Field of the invention

The present invention relates to a frozen aerated product in a container. The present invention more particularly relates to products commonly referred to as aerosols.

Background of the invention

A frozen dessert packaged in a pressurised container is known from US 6,558,729. Aerosol systems for dispensing aerated products have been proposed in the past. EP1,061,006 discloses such a system wherein a container having at least two compartments (A) and (B), gastightly separated from each other by a movable wall, compartment (A) containing a propellant and compartment (B) containing an aerated dessert comprising a blowing agent which is $CO_2$ or $N_2O$ or mixtures thereof, possibly in combination with air or nitrogen. Preferably, the wall is a piston or a flexible/ elastic diaphragm. It can also be constituted by a so-called bag-in can.

Apart from the fact that such a technology absolutely requires the use of a blowing agent, it does not allow for an aerosol system for dispensing frozen aerated products at a temperature of about -18°C to -22°C which is the temperature of domestic freezers.

There is thus a need for a aerosol system for dispensing aerated products at a temperature of a domestic freezer.

It has been found that it is possible to achieve such a goal by carefully formulating the frozen aerated product and by using a specific type of container.

Tests and definitions

**Average molecular weight**

For the purposes of this patent, the average molecular weight for a mixture of freezing point depressants (fdps) is defined by the number average molecular weight $<M>_n$ (equation1). Where $w_i$ is the mass of species i, $M_i$ is the molar mass of species i and $N_i$ is the number of moles of species i of molar mass $M_i$.

$$<M>_n = \frac{\sum w_i}{\sum (w_i / M_i)} = \frac{\sum N_i M_i}{\sum N_i}$$

**Freezing point depressants**

Freezing point depressants (fpds) as defined in this invention consist in:

- monosaccharides and disaccharides
- Oligosaccharides containing from 3 to ten monosaccharide units joined in glycosidic linkage.
- Corn syrups with a dextrose equivalent (DE) of greater than 20 preferably > 40 and more preferably > 60. Corn syrups are complex multi-component sugar mixtures and the dextrose equivalent is a common industrial means of classification. Since they are complex mixtures their number average molecular weight $<M>_n$ can be calculated from the equation below. (Journal of Food Engineering, 33 (1997) 221-226)

$$DE = \frac{18016}{<M>_n}$$

- Erythritol, arabitol, glycerol, xylitol, sorbitol, mannitol, lactitol and malitol.

**Definition of overrun.**

Overrun is defined by the following equation

$$OR = \frac{volume..of..ice..cream - volume..of..premix..at..ambient..temp}{volume..of..premix..at..ambient..temp} \times 100$$

It is measured at atmospheric pressure.

**Valves**

The three valves used in the examples were commercial aerosol valves mounted in 1 inch cups.

*Valve i:*

Standard aerosol whipped-cream valve from Precision Valve UK Ltd (Peterborough, UK). Includes a stem (part no: 04-5390-00) with 3 x 0.050" holes in a crown inverted 4 x slot housing (part no: 07-6954-00). The valve was fitted with a standard whipped cream actuator (Gothic Spout 02-1591-00) also from Precision Valve.

*Valve ii:*

Standard tilt (or "Clayton") valve supplied by Precision Valve UK Ltd as used conventionally for highly viscous materials such as caulking compounds and aerosol cheese spreads.

*Valve iii:*

A high-discharge fire extinguisher aerosol valve (part no: BK261) supplied by Firemaster Extinguisher Ltd (London, UK). This is a female valve and was used with the basic actuator as supplied.

**Valve Characterisation**

The flow of a fluid through an aerosol valve is extremely complex owing to the intricate geometries used. In addition many of the products currently used with high-discharge valves, such as caulking compounds and foaming fire extinguishing compositions have complex rheological behaviour. Therefore it is not possible to extrapolate discharge rates from one valve/product combination to another and a product-independent measure of the discharge rate is required.
For a Newtonian fluid flowing along a pipe or through an orifice, the flow rate, $Q$, is directly proportional to the pressure drop, $P$, across the pipe/orifice and inversely proportional to the viscosity, $\square$, of the fluid, with the remaining factor being a function of the geometry (see for example, H.A. Barnes, J.F.Hutton and K.Walters, "An Introduction to Rheology", 1989, Elsevier, Amsterdam). Therefore a convenient way of characterising the discharge rate of aerosol valves is to measure the flow rate of a Newtonian liquid at a given gauge pressure and calculate the remaining (valve-dependant) factor, here called $N$:

$$N = \frac{Q\eta}{P}$$

In order to calculate this factor for the valves used in this work, we have measured the discharge rate of a Newtonian liquid through the valves at known pressures.
The liquid used was a 42 DE glucose syrup (C*Sweet 01136, batch NK6634, [Cerestar, Manchester, UK]). The rheology of this material was measured at 20°C using an AR1000 controlled-stress rheometer (TA Instruments, Leatherhead, UK) operating with a cone-and-plate geometry fitted with a solvent trap. A stress sweep from 0 to 5000 Pa in 5 minutes revealed no significant dependence of the viscosity on stress, so confirming the Newtonian nature of the syrup. Viscosity values from 3 specimens were averaged to give a mean viscosity of 208±23 Pa s, where the uncertainty is the 95% confidence interval from the three independent measurements.
Bag-in-can aerosol cans ("Sepro" cans with a bag capacity of 200 ml, from US Can Ltd) were filled with the syrup and each valve-type fitted to three cans. The cans were then bottom-gassed to a pressure of 10.2 barg with compressed air. Syrup was then dispensed from each can directly onto a balance at a temperature of 20°C and the mass recorded every 10 s for 2 minutes or until 20g are dispensed, whichever comes first. The final gauge pressure of the can, $P_f$, was then recorded. The mass dispensed was converted to volume by dividing by the syrup density (1.39 g cm$^{-3}$) and for all samples, the plot of volume dispensed vs time was approximately linear. The slope of this plot was calculated to give the $Q$ values. The $N$ factor for each can was then calculated for the average pressure during dispensing, i.e., $P = $ (10.2 barg - $P_f$)/2. The mean $N$ value for each valve type, with the 95% confidence interval for three cans was:

Valve i: $N = (4\pm2)\times10^{-12}$ m$^3$
Valve ii: $N = (70\pm40)\times10^{-12}$ m$^3$
Valve iii: $N = (121\pm4)\times10^{-12}$ m$^3$

Brief description of the invention

It is a first object of the present invention to provide a frozen aerated product in a container, the container having at least two compartments (A) and (B), said compartments being gastighlty separated from each other by an at least partially movable wall, compartment (A) containing a propellant and compartment (B) containing the frozen aerated product, compartment (B) being provided with a valve, wherein the frozen aerated product contains freezing point depressants in an amount of between 20 % and 40 % w/w, preferably above 25%, and between 0% and 15% fat, preferably between 2 and 12%, even more preferably below 8% the freezing point depressants having a number average molecular weight $<M>_n$ following the following condition:

$$<M>_n =< (330 - 8\ FAT)\ g\ mol^{-1}$$

Wherein FAT is the fat level in percent by weight of the product.

Preferably the average molecular weight is below 250, more preferably below 230.

Preferably, the freezing point depressants are made at least a level of 98% (w/w) of mono, di and oligosaccharides. Preferably, since fructose delivers a very sweet taste, the frozen aerated product contains less that 10% w/w fructose, more preferably less than 5% w/w fructose, even more preferably less than 2.5% w/w fructose.

Preferably also the frozen aerated product according to the invention contains less than 1% (w/w)glycerol, preferably less than 0.5% (w/w), even more preferably less than 0.25% (w/w), even more preferably less than 0.1% (w/w).

Preferably also, the frozen aerated product contains more than 2% and less than 8% w/w proteins, preferably less than 6% w/w since it has been found that too high a protein content leads to a chalky, cheesy texture which should be avoided.

In a preferred embodiment of the invention, the frozen aerated product has an overrun of less than 150%, preferably less than 140% and more than 80%.

In another preferred embodiment of the invention the frozen aerated product has an overrun of more than 150%, preferably more than 170%.

In a particularly preferred embodiment of the invention, the valve has a N value (ratio of the flow rate of a Newtonian fluid and the viscosity to the pressure drop across the valve) greater than 50 x 10^(-12) m$^3$ and less than 10^(-7)m$^3$, and preferably greater than 100 x 10^(-12) m$^3$.

In a preferred embodiment of the invention, the container is at least partially covered by a thermally insulating coating having a thermal conductivity of 0.01 to 0.1 W / m K, more preferably around 0.03 W / m K. Preferably this coating is in the form of a label having a thickness of between 100 and 200 microns, more preferably around 150 microns. More preferably, the thermally insulating coating covers at least 50 % of the surface of the container. This allows for the container to be immediately handled and manipulated by a consumer once taken of a freezer compartment while not generating in the fingers of the consumer too cold a feeling.

It is a second object of the present invention to provide a process for filling a frozen aerated product into a container, this container having at least two compartments (A) and (B), said compartments being gastighlty separated from each other by an at least partially movable wall, compartment (A) containing a propellant and compartment (B) containing the frozen aerated product, compartment (B) being provided with a valve, wherein the propellant is first introduced into compartment (A), up to where a pressure of at between 1 barg and 10 barg is reached, then the frozen aerated product is introduced into compartment (B) until a pressure of between 5 barg and 12 barg, preferably above 8 barg, is reached.

In the description 'barg' means 'bar gauge' and the pressure was measured at a temperature of -10°C.

This process allows for filling more fully the container than if the product was first introduced into compartment (B) and then propellant was introduced into compartment (A) since it allows for reaching higher pressure than the resilience of the movable wall would allow for if the product was first introduced in compartment (B) and then propellant was added into compartment (A).

Such a process also allows for the air inside compartment (B) to be expelled before the frozen aerated product is introduced. This greatly simplifies and speeds up the filling process since no vent is required to remove the air from compartment (B) while the frozen aerated product is introduced.

It is a third object of the invention to provide a frozen aerated confection having an overrun of above 80% and below 250%, preferably above 100%, containing;

. less than 0.5% w/w glycerol
. freezing point depressants in an amount of between 25 % and 37 % w/w, and
. between 0% and 15% fat, preferably between 2% and 12%, even more preferably below 8%
. the freezing point depressants having a number average molecular weight $<M>_n$ following the following condition:

$$<M>_n =< (330 -8 \text{ FAT}) \text{ g mol}^{-1}$$

Wherein FAT is the fat level in percent by weight of the product.

Preferably the freezing point depressants have a number average molecular weight $<M>_n$ below 250 and even more preferably below 230.

Preferably the freezing point depressants are made at least a level of 98% (w/w) of mono, di and oligosaccharides. Preferably, since fructose delivers a very sweet taste, the frozen aerated product contains less that 10% w/w fructose, more preferably less that 5% w/w fructose, even more preferably less than 2.5% w/w fructose.

Preferably also the frozen aerated confection according to the invention contains less than 0.25% glycerol, even more preferably less than 0.1%.

Preferably also, the frozen aerated product contains more than 2% and less than 8% w/w proteins, preferably less than 6% w/w since it has been found that too high a protein content leads to a chalky, cheesy texture which should be avoided.

In a preferred embodiment of the invention the frozen aerated product has an overrun of less than 150%, more preferably less than 140%.

In another preferred embodiment of the invention the frozen aerated product has an overrun of more than 150%, more preferably more than 170%.

Detailed description of the invention

The present invention will be further described with reference to the following examples.

**Example 1**

The following formulations were tested wherein all concentrations are % (w/w). In formulations A-D the fat content was kept constant while the average molecular weight and amount of the freezing point depressants varied.

*Formulations A-E:*

|  | A | B | C | D | E |
|---|---|---|---|---|---|
| SMP | 10.00 | 10.00 | 10.00 | 10.00 | 10.00 |
| Vanilla Flavour | 0.01 | 0.01 | 0.01 | 0.01 | 0.01 |
| Coconut Oil | 10.00 | 10.00 | 10.00 | 10.00 | 20.00 |
| Monoglyceride Emulsifier | 0.30 | 0.30 | 0.30 | 0.30 | 0.30 |
| LBG | 0.20 | 0.20 | 0.20 | 0.20 | 0.20 |
| Dextrose | 21.50 | 15.20 | 8.50 | 0 | 11.00 |
| Sucrose | 10.75 | 7.60 | 4.75 | 9.80 | 5.50 |
| 42 DE Glucose Syrup | 0 | 0 | 0 | 19.60 | 0 |

(continued)

|  | A | B | C | D | E |
|---|---|---|---|---|---|
| Water | 47.24 | 56.69 | 66.24 | 50.09 | 52.99 |
| FDP Solids: | 37.3 | 27.8 | 18.3 | 30.6 | 21.5 |
| Mn (g mol⁻¹) | 225 | 229 | 241 | 383 | 234 |

*Formulation F*

| | |
|---|---|
| Butter Fat | 11.00 |
| SMP | 11.00 |
| Fructose | 03.00 |
| Sorbitol | 10.80 |
| 40 DE Glucose Syrup Powder | 10.00 |
| MC Cellulose (Avicel RC581) | 00.25 |
| 220 Bloom Gelatin | 00.15 |
| LBG | 00.07 |
| Guar Gum | 00.05 |
| Carrageenan (L100) | 00.02 |
| Monoglyceride Emulsifier | 00.40 |
| Polysorbate 80 | 00.05 |
| Water | 53.21 |
| (FDP Solids | 29.3) |
| (Mn (g mol⁻¹) | 257 ) |

Specialist materials were as follows:

- LBG was Viscogum FA supplied by Degussa Texturant Systems, France.
- Guar was supplied by Meypro, Zaandam, the Netherlands.
- Carrageenan was Genulacta L100 supplied by CPKelco, Lille Skensved, Sweden.
- Gelatin (220 Bloom) was supplied by Systems Bio-Industries, Newbury, UK.
- Micro-crystalline cellulose was Avicel RC581 supplied by FMC, Philidelphia, USA.
- Monoglyceride emulsifier was ADMUL MG 40-04 supplied by Quest International, Bromborough Port, UK.
- 42 DE glucose Syrup was C*Sweet 01136, had a moisture level of 20% and was supplied by Cerester, Manchester, UK.
- 40 DE glucose syrup powder was C*Pur 01934, had a moisture level of <3% and was supplied by Cerester, Manchester, UK.

**Manufacturing process**

All ingredients except from the fat and emulsifier are combined in an agitated heated mix tank. The fat is melted and emulsifier added to the liquid fat prior to pouring into the mix tank. Once all of the ingredients are blended together, the mix is subjected to high shear mixing at a temperature of 65°C for 2 minutes. The mix is passed through a homogeniser at 140 bar and 70°C and then subjected to pasteurisation at 83°C for 20 s before being rapidly cooled to 4°C by passing through a plate heat exchanger. The mix is held at 4°C for 2 hours in a churn prior to freezing. The formulation is frozen using a typical ice cream freezer (Hoyer MF75) operating with an open dasher (series 80), a mix flow rate of 20 1 / hour, an extrusion temperature of between -6 and -11°C and an overrun (at 1 bar) of 100%.

Product was extruded directly into bag-in-can aerosol cans ("Sepro" cans with a bag capacity of 200 ml, from US Can Ltd [Southhall, UK]) from the ice cream freezer, with each can being filled to the brim. The cans were then loosely capped with aluminium foil (to prevent microbiological contamination) before being hardened in a blast freezer (air temperature of -35°C) for 2 hours.

Prior to gassing and testing, the filled cans were stored at -25°C for three days and then at -18°C for three days.

**Dispensability Measurements**

The filled cans were taken, one at a time, from the -18°C store and valves swaged onto the openings (3 cans for each formulation /valve combination). The can was then bottom-gassed to 10 barg with compressed air and re-equilibrated at -18°C for 5 hours. One can at a time was then removed from -18°C and immediately tested by actuating the valve and measuring the mass of product dispensed in 20 s. The average mass extruded (in grams) for each valve/ formulation combination (along with the 95% confidence interval calculated from the three measurements) is summarised in the following table:

| | Formulation | | | | | |
|---|---|---|---|---|---|---|
| | **A** | **B** | **C** | **D** | **E** | **F** |
| **Valve i** | 6±5 | 6±3 | 0 | 0 | 0 | 0 |
| **Valve ii** | 10±4 | 2.8±0.4 | 0 | 0 | 0 | 0 |
| **Valve iii** | 26±3 | 8±1 | 0 | 0 | 0.1±0.3 | 0 |

From this, it can be seen that formulations C, D, and F never flowed at all. Formulation C shows that a minimum amount of freezing point depressants is required. Formulation D and F show that freezing point depressant with a too high molecular weight do not work. Formulation E shows that it is only for very wide nozzles that the product starts to flow and that too much fat, bringing too much viscosity, is to be avoided.

## Example 2

In this example various fat levels were tested together with various freezing point depressant average molecular weight to study the relation between the two with regard to the flowability out of a defined aerosol can.
All concentrations are % (w/w).
Specialist materials were as follows:

- LBG was Viscogum FA supplied by Degussa Texturant Systems, France.
- Monoglyceride emulsifier was ADMUL MG 40-04 supplied by Quest International, Bromborough Port, UK.
- Low Fructose Corn Syrup was C*TruSweet 017Y4, had a moisture level of 22%, a DE of 63 and was supplied by Cerester, Manchester, UK.

10% Fat Formulations:

| | H1 | H2 | H3 |
|---|---|---|---|
| SMP | 10.0 | 10.0 | 10.0 |
| Coconut Oil | 10.0 | 10.0 | 10.0 |
| LBG | 0.2 | 0.2 | 0.2 |
| Monoglyceride Emulsifier | 0.2 | 0.2 | 0.2 |
| Low Fructose Corn Syrup | 10.0 | 17.0 | 23.0 |
| Dextrose | 16.0 | 11.0 | 6.0 |
| Water | 53.6 | 51.6 | 50.6 |
| | | | |
| FDP Solids: | 28.8 | 29.3 | 28.9 |
| $M_n$ (g mol$^{-1}$) | 220 | 240 | 262 |

7% Fat Formulations:

|  | M1 | M2 | M3 |
|---|---|---|---|
| SMP | 10.0 | 10.0 | 10.0 |
| Coconut Oil | 7.0 | 7.0 | 7.0 |
| LBG | 0.20 | 0.2 | 0.2 |
| Monoglyceride Emulsifier | 0.20 | 0.2 | 0.2 |
| Low Fructose Corn Syrup | 18.5 | 26.0 | 31.0 |
| Dextrose | 11.5 | 6.5 | 2.0 |
| Water | 52.6 | 50.1 | 49.6 |
|  |  |  |  |
| FDP Solids: | 30.9 | 31.8 | 31.2 |
| Mn (g mol$^{-1}$) | 240 | 261 | 283 |

5% Fat Formulations:

|  | L1 | L2 | L3 |
|---|---|---|---|
| SMP | 10.0 | 10.0 | 10.0 |
| Coconut Oil | 5.0 | 5.0 | 5.0 |
| LBG | 0.20 | 0.2 | 0.2 |
| Monoglyceride Emulsifier | 0.20 | 0.2 | 0.2 |
| Low Fructose Corn Syrup | 24.0 | 32.0 | 30.0 |
| Dextrose | 9.0 | 3.0 | - |
| Sucrose | - | - | 5.0 |
| Water | 51.6 | 49.6 | 49.6 |
|  |  |  |  |
| FDP Solids: | 32.7 | 33.0 | 33.4 |
| Mn (g mol$^{-1}$) | 252 | 278 | 301 |

**Process**

All ingredients except from the fat and emulsifier are combined in an agitated heated mix tank. The fat is melted and emulsifier added to the liquid fat prior to pouring into the mix tank. Once all of the ingredients are blended together, the mix is subjected to high shear mixing at a temperature of 65°C for 2 minutes.

The mix is passed through a homogeniser at 140 bar and 70°C and then subjected to pasteurisation at 83°C for 20 s before being rapidly cooled to 4°C by passing through a plate heat exchanger.

The mix is held at 4°C for 24 hours in a churn prior to freezing.

The formulation is frozen using a typical ice cream freezer (Hoyer MF75) operating with an open dasher (series 80), a mix flow rate of 25 1 / hour, an extrusion temperature of between -8 and -11°C and an overrun (at 1 bar) of 100%.

Product was extruded directly into bag-in-can aerosol cans ("Sepro" cans from US Can Ltd [Southhall, UK]) from the ice cream freezer, with each can being filled to the brim. The cans were then loosely capped with aluminium foil (to prevent microbiological contamination) before being hardened in a blast freezer (air temperature of -35°C) for 2 hours.

Prior to gassing and testing, the filled cans were stored at -25°C for three days and at -18°C for three days.

**Dispensability measurements**

Valve iii was used ( *N*-value of $(121 \pm 4) \times 10^{-12}$ m$^3$).

The filled cans were taken, one at a time, from the -18°C store and valves swaged onto the openings (3 cans for each formulation). The can was then bottom-gassed to 6 barg with compressed air and re-equilibrated at -18°C for 5 hours. One can at a time was then removed from -18°C and immediately tested by actuating the valve and measuring the mass of product dispensed in 20 s. The average mass extruded for each formulation (along with the 95% confidence interval calculated from the three measurements) is summarised in the following table:

| Formulation | % Fat | Mn (g mol$^{-1}$) | Mass Extruded (g) |
|---|---|---|---|
| H1 | 10 | 220 | 1.2±0.2 |
| H2 | 10 | 240 | 0.6±0.2 |
| H3 | 10 | 262 | 0.03±0.06 |
| | | | |
| M1 | 7 | 240 | 1.9±0.3 |
| M2 | 7 | 261 | 1.8±0.2 |
| M3 | 7 | 283 | 0.4±0.5 |
| | | | |
| L1 | 5 | 252 | 2.5±0.5 |
| L2 | 5 | 278 | 0.7±0.3 |
| L3 | 5 | 301 | 0.5±0.6 |

It can be deduced from these data that the limit of flowability is Mn ~ 250 g mol$^{-1}$ at 10% fat, Mn ~ 270 g mol$^{-1}$ at 7% fat and Mn ~ 290 g mol$^{-1}$ at 5% fat.

This implies that there is a linear relationship between the amount of fat, *f*, (% w/w) and the Mn of the freezing point depressants below which the product will flow at an appreciable rate:

$$Mn < (-8f + 330) \text{ g mol}^{-1}.$$

### Example 3:

This example describes the use of a formulation according to the invention wherein the container is filled under pressure

**Formulation**

All concentrations are % (w/w).

Specialist materials were as follows:

- LBG was Viscogum FA supplied by Degussa Texturant Systems, France.

- Monoglyceride emulsifier was ADMUL MG 40-04 supplied by Quest International, Bromborough Port, UK.

- Acetic acid ester of monoglyceride was Grinsted ACETEM 50-00 A supplied by Danisco Cultor, Wellingborough, UK.

- Low Fructose Corn Syrup was C*TruSweet 017Y4, had a moisture level of 22%, a DE of 63 and was supplied by Cerester, Manchester, UK.

| | |
|---|---|
| SMP | 10.00 |
| Coconut Oil | 05.00 |
| Dextrose | 08.80 |

(continued)

| | |
|---|---|
| Low Fructose Corn syrup | 22.60 |
| Monoglyceride Emulsifier | 00.70 |
| Acetic Acid Esters | 00.40 |
| LBG | 00.20 |
| Vanilla Flavour | 00.01 |
| Water | 52.29 |
| | |
| (FDP Solids | 31.4 ) |
| (Mn (g mol$^{-1}$) | 251 ) |

**Packaging**

Aluminium aerosol cans of the piston-type (CCL Container, Ontario, Canada) were used (675 ml brim-fill capacity, 18 bar burst pressure). These cans had a wall-wiping piston (175 ml volume, giving a maximum product volume of 500 ml) and hole to accommodate a bottom-plug. Prior to use, an adhesive insulating label was applied to the body of each can. The labels used were of the expanded-polystyrene type [FoamTac II S2000 (Avery Dennison Group, Pasadena, California, USA)] and had a thickness of around 150$\mu$m and a thermal conductivity of around 0.03 W m$^{-1}$ K$^{-1}$ at 273 K.

The valves used were high-discharge valves (Precision Valve, Peterborough, UK) with a 4.8 mm I.D. stem having 2 orifices of 3.2 $\times$ 4.6 mm (part no: 04-2116-XE), located in a standard 1-inch cup and having a housing with 4-slots and a tailpiece orifice (part no:07-2662-XE). When used in combination with the actuator, this valve has an *N*-value of (500 $\pm$ 100) $\times$10$^{-12}$ m$^3$.

**Process**

*Mixing*

All ingredients except from the fat and emulsifiers were combined in an agitated heated mix tank. The fat was melted and emulsifiers added to the liquid fat prior to pouring into the mix tank. Once all of the ingredients were blended together, the mix was subjected to high shear mixing at a temperature of 65°C for 2 minutes.

*Homogenisation and Pasteurisation*

The mix was passed through a homogeniser at 150 bar and 70°C and then subjected to pasteurisation at 83°C for 20 s before being rapidly cooled to 4°C by passing through a plate heat exchanger.

*Ageing*

The mix is held at 4°C for 5 hours in an agitated tank prior to freezing.

*Gassing*

Before attaching the valves, a positive air pressure was applied to the bottom hole of each can to ensure that the piston is pushed to the top. The valves were then clinched onto the cans in the usual manner to give a gas-tight seal. The cans were then bottom gassed to 2.5 barg with compressed air and simultaneously plugged using a Pamasol P593 X two-chamber propellant filler (DH Industries, Laindon, Essex, UK).

*Freezing*

The formulation was frozen using a typical ice cream freezer (scraped surface heat exchanger, SSHE) operating with an open dasher (series 80), a mix flow rate of 150 l / hour, an extrusion temperature of -9°C and an overrun (at atmospheric pressure) of 135%.

*Filling*

From the freezer, the ice cream was fed directly into an aerosol-dosing chamber (DH Industries, Laindon, Essex, UK) at a line pressure of 12 barg. When full, the dosing chamber was then pressurised to 60 barg (by means of an intensifier) and a known volume of ice cream injected through the valve into the can. The volume injected was around 475 ml, giving a final can pressure of around 9.5 barg at -10°C. Each can was then fitted with an actuator and then transferred to a -25°C store for hardening and storage.

*Storage*

Cans were stored at -25°C for 1 week and then tempered at either -18°C or -12°C for 24 hours before use.

**Final Product**

The average flow rate determined by recording the mass dispensed in 10 s at -18°C was 4.7 $\pm$ 0.3 g s$^{-1}$. The products had good stand-up when dispensed at both -12°C and -18°C. Also, owing to the use of the insulating label, the cans were comfortable to handle directly on removal from the cold store.

**Claims**

1. Frozen aerated product in a container, the container having at least two compartments (A) and (B), said compartments being gastighlty separated from each other by an at least partially movable wall, compartment (A) containing a propellant and compartment (B) containing the frozen aerated product, compartment (B) being provided with a valve, wherein the frozen aerated product contains freezing point depressants in an amount of between 20% and 40% w/w, and between 0% and 15% fat, the freezing point depressants having a number average molecular weight $<M>_n$ following the following condition:

$$<M>_n =< (330 - 8\ FAT)\ g\ mol^{-1}$$

Wherein FAT is the fat level in percent by weight of the product.

2. Frozen aerated product in a container according to claim 1 wherein the freezing point depressants are made at least a level of 96% (w/w) of mono, di and oligosaccharides.

3. Frozen aerated product in a container according to claim 1 containing less than 0.5% (w/w) glycerol, preferably less than 0.25% (w/w), even more preferably less than 0.1% (w/w).

4. Frozen aerated product in a container according to claims 1 to 3 having an overrun of less than 150%, preferably less than 140%.

5. Frozen aerated product in a container than to claims 1 to 3 having an overrun of more than 150%, preferably more than 170%.

6. Frozen aerated product according to claims 1 to 3 wherein the valve has a *N* value (ratio of the flow rate of a Newtonian fluid and the viscosity to the pressure drop Newtonian valve) greater than 50 x 10^(-12) m$^3$ and less than 10^(-7) m$^3$, and preferably greater than 100 x 10^(-12) m$^3$.

**Patentansprüche**

1. Gefrorenes lufthaltiges Produkt in einem Behälter, wobei der Behälter wenigstens zwei Kompartimente (A) und (B) hat, wobei die Kompartimente durch wenigstens eine partiell bewegliche Wand gasdicht voneinander getrennt sind, wobei Kompartiment (A) ein Treibmittel enthält und Kompartiment (B) das gefrorene lufthaltige Produkt enthält, wobei Kompartiment (B) mit einem Ventil versehen ist, wobei das gefrorene lufthaltige Produkt den Gefrierpunkt senkende Mittel in einer Menge von zwischen 20 % und 40 % G/G und zwischen 0 % und 15 % Fett enthält, die den Gefrierpunkt senkenden Mittel ein zahlenmittleres Molekulargewicht $<M>_n$ entsprechend der folgenden Bedingung haben:

$$<M>_n =< (330 - 8 \text{ FAT}) \text{ g mol}^{-1}$$

wobei FAT die Fettkonzentration des Produkts in Gewichtsprozent ist.

2. Gefrorenes lufthaltiges Produkt in einem Behälter gemäß Anspruch 1, wobei die den Gefrierpunkt senkenden Mittel zu einem Level von wenigstens 98 % (G/G) aus Mono-, Di- und Oligosacchariden bestehen.

3. Gefrorenes lufthaltiges Produkt in einem Behälter gemäß Anspruch 1, das weniger als 0,5 % (G/G) Glycerin, vorzugsweise weniger als 0,25 % (G/G), insbesondere bevorzugt weniger als 0,1 % (G/G), enthält.

4. Gefrorenes lufthaltiges Produkt in einem Behälter gemäß den Ansprüchen 1 bis 3, das einen Aufschlag von weniger als 150 %, vorzugsweise weniger als 140 %, hat.

5. Gefrorenes lufthaltiges Produkt in einem Behälter gemäß den Ansprüchen 1 bis 3, das einen Aufschlag von mehr als 150 %, vorzugsweise mehr als 170 %, hat.

6. Gefrorenes lufthaltiges Produkt gemäß den Ansprüchen 1 bis 3, wobei das Ventil einen N-Wert (Verhältnis der Strömungsrate eines Newton'schen Fluids und der Viskosität zu dem Druckabfall durch das Ventil) von größer als $50 \times 10^{-12}$ m³ und weniger als $10^{-7}$ m³ und vorzugsweise größer als $100 \times 10^{-12}$ m³ hat.

**Revendications**

1. Produit aéré congelé contenu dans un récipient, le récipient ayant au moins deux compartiments (A) et (B), lesdits compartiments étant séparés l'un de l'autre de façon imperméable aux gaz par une paroi au moins partiellement mobile, le compartiment (A) contenant un propulseur et le compartiment (B) contenant le produit aéré congelé, le compartiment (B) étant doté d'une valve, le produit aéré congelé contenant des agents de diminution du point de congélation en une quantité entre 20 % et 40 % en poids/poids et entre 0 % et 15 % de graisse, les agents de diminution du point de congélation ayant un poids moléculaire moyen en nombre $<M>_n$ satisfaisant à la condition suivants :

$$<M>_n \leq (330 - 8 \text{ FAT}) \text{ g mole}^{-1}$$

où FAT est le taux de graisse en pourcentage en poids du produit.

2. Produit aéré congelé contenu dans un récipient selon la revendication 1, dans lequel les agents de diminution du point de congélation constituent au moins un niveau de 98 % (p/p) des mono-, di- et oligosaccharides.

3. Produit aéré congelé contenu dans un récipient selon la revendication 1, contenant moins de 0,5 % (p/p) de glycérol, de préférence moins de 0,25 % (p/p), de manière encore davantage préférée, moins de 0,1 % (p/p).

4. Produit aéré congelé contenu dans un récipient selon les revendications 1 à 3, ayant un foisonnement inférieur à 150 %, de préférence inférieur à 140 %.

5. Produit aéré congelé contenu dans un récipient selon les revendications 1 à 3, ayant un foisonnement supérieur à 150 %, de préférence, supérieur à 170 %.

6. Produit aéré congelé selon les revendications 1 à 3, dans lequel la valve a une valeur $N$ (rapport du débit d'un fluide newtonien et de la viscosité à la baisse de pression dans la valve) supérieure à $50 \times 10^{-12}$ m³ et inférieure à $10^{-7}$ m³ et de préférence, supérieure à $100 \times 10^{-12}$ m³.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6558729 B

- EP 1061006 A

**Non-patent literature cited in the description**

- *Journal of Food Engineering,* 1997, vol. 33, 221-226

- **H.A. Barnes ; J.F.Hutton ; K.Walters.** An Introduction to Rheology. Elsevier, 1989